Europäisches Patentamt

European Patent Office

Office européen des brevets

(19)

(11) EP 0 747 729 A1

## (12) DEMANDE DE BREVET EUROPEEN

(43) Date de publication:
**11.12.1996 Bulletin 1996/50**

(51) Int Cl.⁶: **G01T 1/185**, G01T 1/02

(21) Numéro de dépôt: **96450013.6**

(22) Date de dépôt: **05.06.1996**

(84) Etats contractants désignés:
**BE DE GB IT SE**

(30) Priorité: **07.06.1995 FR 9506932**

(71) Demandeur: **AEROSPATIALE SOCIETE NATIONALE INDUSTRIELLE, Société Anonyme dite: 75781 Paris Cedex 16 (FR)**

(72) Inventeurs:
- **Perilleux,Philippe Jean-Pierre 33160 Saint Medard en Jalles (FR)**
- **Soubie,Robert 33170 Gradignan (FR)**

(74) Mandataire: **Thébault, Jean-Louis Cabinet Thébault S.A. 1 Allées de Chartres 33000 Bordeaux (FR)**

(54) **Procédé de contrôle en temps réel du débit de dose de rayonnements ionisants et dispositif pour sa mise en oeuvre**

(57) -L'objet de l'invention est un procédé de contrôle en temps réel du débit de dose de particules ou rayonnements ionisants, notamment de rayonnements X, générés à partir d'un accélérateur linéaire d'électrons et appliqués à des objets à diverses fins, caractérisé en ce qu'il consiste à prélever en continu à l'aide d'une chambre d'ionisation appropriée (7), du type à électrodes planes, placée dans le champ de particules ou rayonnement ionisant (8), le courant de collecte de charge entre les électrodes, image du débit de dose instantané dudit rayonnement, à acheminer, par l'intermédiaire d'un système conducteur blindé approprié (11), ledit courant de collecte à une chaîne d'amplification et mesure (12) disposée en dehors (9) de la zone d'irradiation (8) et traduisant les intensités de lesdites valeurs de débit de dose, et à traiter et/ou afficher et/ou enregistrer lesdites valeurs de débit de dose.

- Application notamment à la polymérisation de résines de matériaux composites.

FIG.1

## Description

La présente invention a trait à l'irradiation d'objets par des particules ionisantes et/ou des rayonnements ionisants générés à partir d'un accélérateur linéaire d'électrons, plus communément dénommé canon à électrons et vise plus particulièrement le contrôle en temps réel, c'est-à-dire en cours d'ionisation, du débit de dose de rayonnements appliquées aux objets.

De tels rayonnements et faisceaux de particules sont couramment utilisés pour la polymérisation ou réticulation de résines, directement par l'action du faisceau d'électrons issu du canon ou indirectement par un rayonnement X engendré par une cible placé dans le faisceau d'électrons, de résines photoréticulables entrant dans la composition de pièces en matériau composite ou encore pour assurer, à l'aide de rayons X ou d'électrons, la stérilisation à des fins de conservation de matières alimentaires ou la stérilisation d'instruments médicaux.

Bien que la présente invention soit décrite dans la suite dans son application à la polymérisation de résines entrant dans la composition de matériaux composites constituant tout ou partie de pièces ou structures utilisées notamment dans les domaines de l'automobile, l'aéronautique ou le spatial, il est évident que d'autres domaines d'application sont concernés ou envisageables, tels qu'en particulier la stérilisation et/ou la conservation de matières alimentaires ou autres produits ou objets.

Dans le domaine de la polymérisation par ionisation des matériaux composites on utilise un canon à électrons associé à une cible en tungstène escamotable, laquelle permet, lorsqu'elle est interposée dans le faisceau d'électrons du canon, d'engendrer un rayonnement X secondaire.

L'irradiation électronique de la pièce constituée, en tout ou en partie, de matériau composite, à savoir des fibres minérales ou synthétiques imprégnées de résine, s'opère pour des épaisseurs de composites inférieures à 25 mm environ alors que les rayons X sont utilisés pour des épaisseurs supérieures pouvant aller jusqu'à trois cents mm environ.

Bien qu'un contrôle de la puissance de l'accélérateur d'électrons soit effectué, et de manière très précise, grâce à un calorimètre escamotable, préalablement à toute opération de polymérisation, ce contrôle n'est pas faisable pendant l'ionisation et il n'existe actuellement aucun moyen de contrôle du débit de dose envoyé sur le matériau composite.

Or, il est fondamental, pour convenablement réticuler les résines ou les produits radiodurcissables entrant dans la composition de la pièce à traiter, de soumettre le matériau à l'action d'une dose suffisante de rayonnement. Cette dose est la quantité d'énergie nécessaire pour complètement réticuler ou polymériser le produit traité. Elle définit un effet global indépendamment du temps nécessaire pour sa réalisation. Il est donc nécessaire de bien déterminer et maîtriser le débit de dose qui caractérise l'effet produit dans l'unité de temps, ainsi que le temps d'application de ce débit de dose.

Ce problème du contrôle du débit de dose est particulièrement crucial lorsqu'on utilise le rayonnement X. Celui-ci permet des pénétrations nettement plus importantes que celles du rayonnement électronique mais nécessite de surdoser la surface de la pièce à traiter si l'on veut obtenir la dose suffisante d'irradiation à une profondeur donnée.

Par ailleurs, les doses nécessaires à la polymérisation ou réticulation des résines entrant dans la constitution de la pièce à traiter dépendent de la résine et varient dans une large mesure, par exemple entre 2 et 10 Mrad, la dose désirée étant obtenue en jouant sur les deux facteurs : temps et débit de dose.

Le processus industriel d'irradiation d'une pièce en matériau composite consiste à déterminer à partir d'abaques tenant compte de la géométrie et de la nature de la pièce, un cycle de polymérisation au cours duquel va évoluer le profil de la courbe d'irradiation, c'est-à-dire les variations du débit de dose.

Le contrôle préalable, évoqué plus haut, de la puissance de l'accélérateur d'électrons ne garantit pas cependant, notamment dans le cas d'irradiation par rayons X, que les doses nécessaires seront bien envoyées sur les différentes parties de la pièce selon le profil de la courbe d'irradiation préétablie, car il peut survenir en cours d'ionisation des variations ou des "ratés", dus à des impulsions manquantes, dans la puissance du canon à électrons.

Le contrôle de la qualité du processus consiste à vérifier, après irradiation de la pièce, que tout point situé dans l'épaisseur de la pièce à reçu au moins une certaine dose de rayonnement, cette vérification s'effectuant, à la manière connue, par divers systèmes de films dosimétriques.

Il s'agit là d'une méthode de contrôle a posteriori raisonnablement précise et fiable, mais il serait beaucoup plus souhaitable de pouvoir contrôler en temps réel, c'est-à-dire en cours d'ionisation de la pièce, les valeurs de débit de dose afin de vérifier qu'elles suivent bien le profil d'irradiation du cycle de polymérisation, en sorte d'effectuer le contrôle qualité de la pièce en temps masqué évitant le contrôle traditionnel a posteriori et surtout de rectifier éventuellement l'irradiation locale en agissant sur le canon à électrons pour pallier par exemple à une baisse de régime passagère.

La présente invention a précisément pour but de proposer des moyens propres à réaliser un tel contrôle en temps réel du débit de dose de tels rayonnements ionisants.

A cet effet, l'invention a pour objet un procédé de contrôle en temps réel du débit de dose de rayonnements ionisants, notamment de rayonnements X, générés à partir d'un accélérateur linéaire d'électrons et appliqués à des objets à diverses fins, caractérisé en ce qu'il consiste :

- à prélever en continu, à l'aide d'une chambre d'ionisation appropriée, du type à électrodes planes, placée dans le champ du rayonnement ionisant, le courant de collecte des charges entre les électrodes, image du débit de dose instantané dudit rayonnement,
- à acheminer, par l'intermédiaire d'un système conducteur blindé approprié, ledit courant de collecte à une chaîne d'amplification et mesure disposée en dehors de la zone d'irradiation et traduisant les intensités de courant en valeurs de débit de dose,
- et à traiter et/ou afficher et/ou enregistrer lesdites valeurs de débit de dose.

Suivant une application de ce procédé à la polymérisation de résines de pièces ou structures en matériaux composites, on compare l'évolution des valeurs de débit de dose avec des valeurs de débit de dose prédéterminées suivant un cycle d'irradiation établi en fonction de la pièce ou structure à traiter et on détecte les éventuels écarts entre débits programmés et débits détectés, supérieur ou inférieur à des seuils prédéterminés.

Avantageusement, afin d'optimiser le processus d'irradiation et de contrôle, une étape ultime du procédé consiste à commander, en fonction desdits écarts détectés l'accélérateur d'électrons en vue de pallier notamment les variations de régime de ce dernier.

Suivant une caractéristique du procédé de l'invention, on scinde, d'une part, le prélèvement du signal utile, à savoir le courant de collecte des charges engendré dans la chambre d'ionisation et, d'autre part, son traitement et notamment son amplification, afin d'opérer ce traitement en dehors de la zone d'irradiation dans laquelle se trouve ladite chambre.

En effet, la chambre d'ionisation se trouve dans un milieu très pollué électromagnétiquement du fait de la présence du canon à électrons et des puissances importantes mises en oeuvre pour l'irradiation par électrons et/ou rayons X et le courant de collecte des charges de la chambre, qui est extrêmement faible, est inexploitable in situ.

Conformément à l'invention, on achemine ce courant en dehors de la zone l'irradiation, à l'aide d'un système conducteur blindé approprié, tel que par exemple et avantageusement, un câble triaxial dont le conducteur central achemine le signal à traiter.

Dans le cas d'irradiation par rayons X engendrés par une cible, notamment en tungstène, la chambre d'ionisation est de préférence placée dans le lobe de retrodiffusion de la cible en sorte que la chambre ne fait pas d'ombre aux objets en cours de traitement.

Dans le cas d'irradiation électronique, le boîtier de la chambre d'ionisation est avantageusement réalisé en métal approprié tel que de l'aluminium ou mieux encore du tungstène, le boîtier faisant alors office de cible générant un rayonnement X capté par la chambre.

L'invention a également pour objet un dispositif pour la mise en oeuvre du procédé ci-dessus, caractérisé en ce qu'il comprend :

- d'une part, une chambre d'ionisation du type à électrodes planes, et
- d'autre part, un ensemble relié à ladite chambre d'ionisation par l'intermédiaire d'un dispositif conducteur blindé d'acheminement de longueur approprié et résistant au rayonnement X, ledit ensemble comprenant un étage d'amplification, un étage de traitement du signal et des moyens d'exploitation constitués par exemple de moyens d'affichage, de visualisation, d'enregistrement ou des moyens informatisés.

De préférence, l'étage de traitement sera conçue et associée à un micro-contrôleur ou à un micro-ordinateur en sorte de permettre de faire un contrôle de l'évolution dans le temps des débits de dose, une comparaison de ces débits avec ceux préétablis et programmés dans le cadre d'un cycle d'irradiation, un calcul de valeur moyenne et éventuellement une commande du canon à électrons en vue de corriger le tir en cas par exemple de variations passagères de régime du canon.

D'autres caractéristiques et avantages du procédé de l'invention ressortiront de la description qui va suivre d'un mode de mise en oeuvre, description donnée à titre d'exemple uniquement et en regard des dessins annexés sur lesquels :

- Figure 1 est un schéma d'implantation d'un dispositif de contrôle en temps réel du débit de dose d'irradiation par rayons X d'objets en matériaux composites, selon un premier mode de réalisation simplifié ;
- Figure 2 illustre schématiquement le positionnement de la chambre d'ionisation par rapport au canon à électrons et à l'objet à traiter ;
- Figure 3 est un schéma de principe d'un second mode de réalisation à commande par micro-ordinateur, du dispositif de l'invention ;
- Figure 4 représente la forme d'onde du signal recueilli en sortie de la chambre d'ionisation ;
- Figure 5 est une vue schématique de l'empilement d'électrodes constituant la chambre d'ionisation ;
- Figure 6 est une vue en coupe schématique de l'empilement d'électrodes dans son boîtier, et
- Figure 7 est une vue de dessus de l'empilement d'électrodes de la figure 6, le couvercle du boîtier étant enlevé.

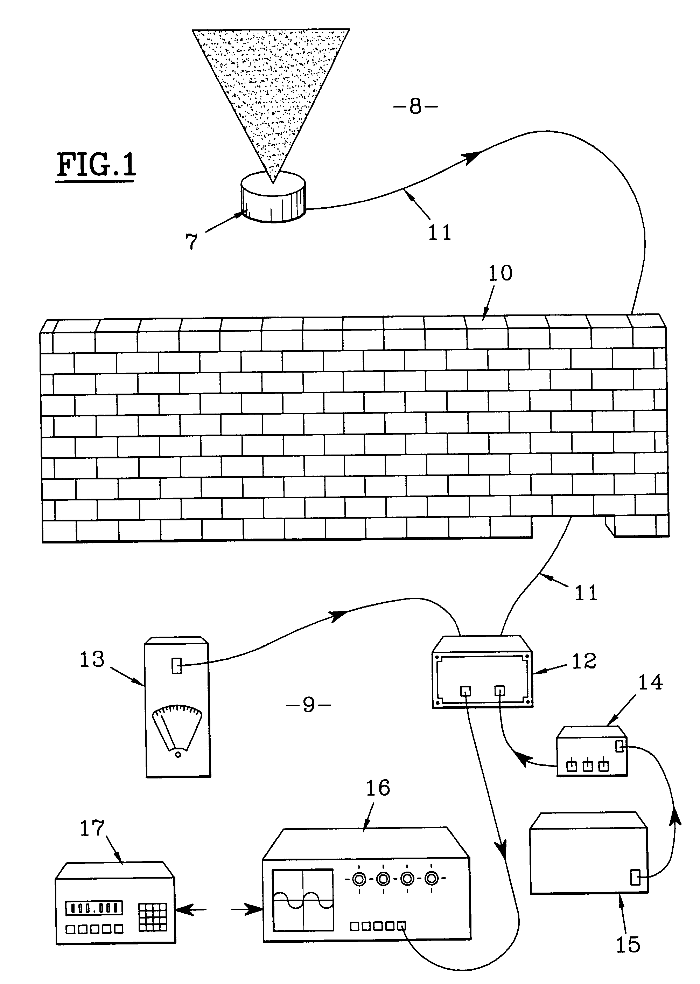

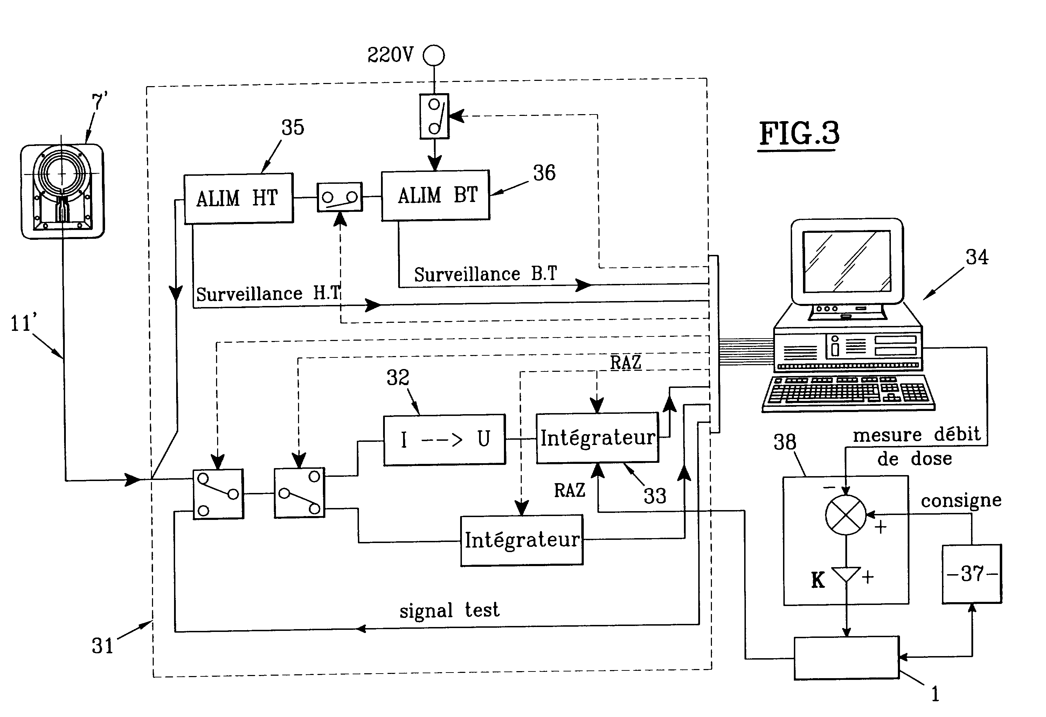

Sur la figure 1 on a schématisé un premier mode de réalisation d'un dispositif de mise en oeuvre du procédé de l'invention visant le contrôle en temps réel du débit de dose d'irradiation par rayons X d'objets en matériaux composites.

Par objet, on entend une pièce, simple ou complexe, de taille variable, constituée intégralement d'un matériau composite ou formée de parties dont certaines seulement sont en matériau composite.

L'irradiation, à des fins de polymérisation ou réticulation de la résine du matériau composite, s'effectue à l'aide d'un canon à électrons envoyant un faisceau d'électrons sur l'objet à traiter, directement ou bien sur une cible interposée engendrant un rayonnement X secondaire reçu par l'objet.

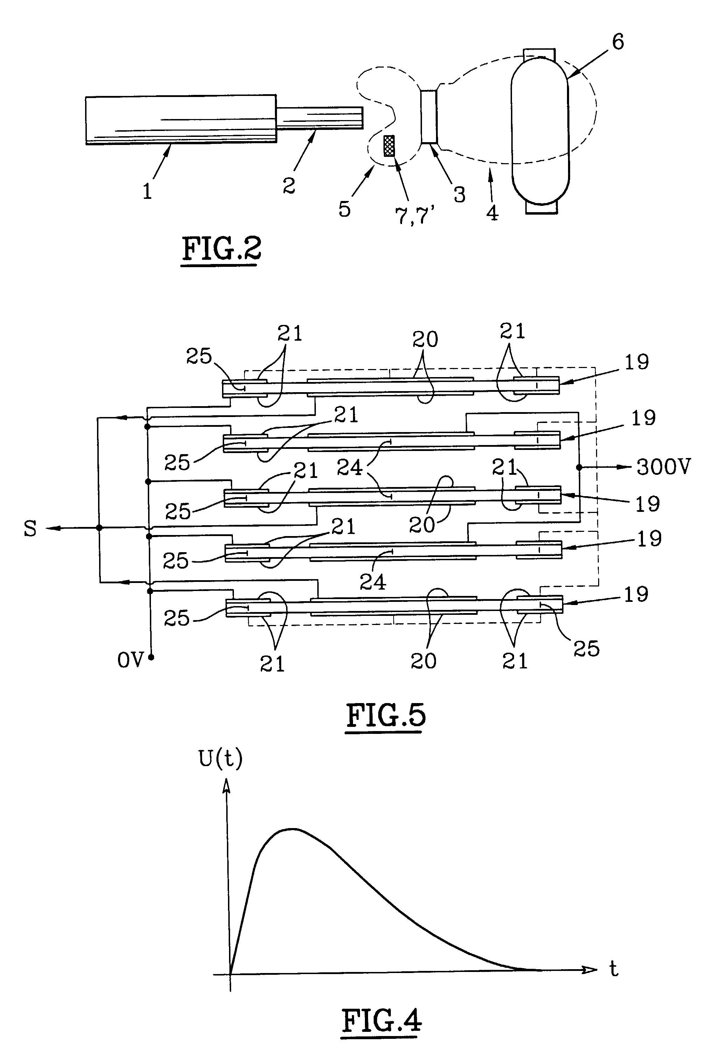

Sur la figure 2 on a très schématiquement illustré en vue de dessus un canon à électrons 1 avec son cornet de sortie 2 en face duquel est placée une cible 3 généralement en tungstène.

En 4 est représenté le lobe principal du champ de rayonnement X secondaire issu de la cible 3 et en 5 le lobe de rétrodiffusion du rayonnement X. En 6 est représenté l'objet à traiter, par exemple une virole à extrémités bombées d'un réservoir en matériau composite, d'axe horizontal perpendiculaire à l'axe du canon 1.

Pour plus de détails sur la polymérisation par ionisation de tels objets par rayonnement électronique ou X, on pourra se reporter utilement aux documents EP-0.165.118 et FR-94 14881 déposés au nom de la Demanderesse.

Dans une installation du type de la figure 2 le faisceau d'électrons accélérés émis par le canon a typiquement la forme d'un tube d'environ 20 mm de diamètre et ce faisceau est affecté d'un mouvement de balayage dans le plan vertical à une fréquence par exemple de l'ordre de 600 Hz.

Le canon 1 fonctionne à régime pulsé et délivre une puissance pouvant varier entre 1,5 et 20 ou 25 Kw, chaque impulsion durant une dizaine de microsecondes et la fréquence de répétition variant entre 50 Hz et 600 Hz. Le spectre d'énergie est constitué d'une raie à 10 MeV.

Lors de l'emploi de la cible 3, qui est escamotable, pour générer un rayonnement X, le spectre d'énergie se situe entre 0 et 5 MeV.

Il va sans dire que l'environnement proche du canon 1 et de la cible 3 est particulièrement pollué électromagnétiquement à cause des différentes sources de parasites du milieu ambiant (présence d'électrons, de rayonnements X, d'ozone, d'effets électromagnétiques secondaires tels que par exemple ceux engendrés par la montée en puissance de l'accélérateur à chaque impulsion) et des niveaux de puissance mis en jeu.

Il n'est pas possible, en vue de mesurer, même approximativement, le débit de dose de rayonnement, électronique ou X, de placer dans le champ de rayonnement des capteurs traditionnels qui ne sont pas adaptés à ce type d'environnement et à ces niveaux d'énergie mis en oeuvre.

Les seules techniques connues de contrôle de la suffisance d'irradiation de l'objet à traiter sont, comme il est rappelé dans le préambule, des contrôles a posteriori avec tous les inconvénients et contraintes que cela implique.

Pour remédier à cela, l'invention propose un procédé de contrôle en temps réel du débit de dose de particules ou rayonnements ionisants, notamment de rayonnements X, générés à partir d'un accélérateur linéaire d'électrons et appliqués à des objets à diverses fins, caractérisé en ce qu'il consiste :

- à prélever en continu à l'aide d'une chambre d'ionisation appropriée, du type à électrodes planes, placée dans le champ du rayonnement ionisant, le courant de collecte des charges entre les électrodes, image du débit de dose instantané dudit rayonnement,

- à acheminer, par l'intermédiaire d'un système conducteur blindé approprié, ledit courant de collecte des charges à une chaîne d'amplification et mesure disposée en dehors de la zone d'irradiation et traduisant les intensités de courant en valeurs de débit de dose,

- et à traiter et/ou afficher et/ou enregistrer l'évolution de ces valeurs de débit de dose.

La figure 1 illustre un mode de mise en oeuvre de ce procédé.

Sur cette figure 1 est schématisé en 7 une chambre d'ionisation du type à électrodes planes, placé dans le champ de rayonnement X secondaire, par exemple dans le lobe de rétrodiffusion 5 comme illustré par la figure 2.

La chambre ou capteur 7 se trouve ainsi dans la zone irradiée désignée par la référence numérique 8 sur la figure 1, que l'on a séparée artificiellement d'une zone 9 dite neutre, par une barrière ou un mur fictif 10.

Conformément à l'invention, le capteur 7 est constitué d'un simple jeu d'électrodes délivrant un signal constitué par le courant de collecte des charges engendré par le flux de particules du rayonnement X traversant l'espace inter-électrodes. Ce signal est en un premier temps acheminé dans la zone neutre 9 pour y être amplifié et traité. A cet effet, la liaison entre les zones 8 et 9 est assurée par un système conducteur blindé constitué de préférence par un câble triaxial 11.

Le câble 11 achemine le signal du capteur 7 à une unité 12 d'amplification-traitement reliée à une alimentation haute-tension 13, à un boîtier de commande 14 avec son alimentation basse-tension 15 et à un oscilloscope 1 6.

Bien entendu, le câble triaxial 11 amène la tension de polarisation appropriée aux électrodes du capteur 7.

En alternative à l'oscilloscope 16 ou en complément est représenté en 17 un multimètre d'affichage de mesure, les appareils 16 et 17 pouvant avantageusement être complétés par un enregistreur graphique (non représenté).

On a représenté en figures 5, 6 et 7 un mode de réalisation du capteur dont le type à électrodes planes et le principe de fonctionnement sont bien connus.

Dans un boîtier métallique 18 sont empilées cinq électrodes constituées par des disques 19 en matériau diélectrique, par exemple en verre époxy, pourvus sur leurs deux faces de pistes en cuivre.

Plus précisément, chaque disque 19 comporte sur chaque face une couche mince de cuivre centrale 20 de forme circulaire, entourée d'une couche mince annulaire périphérique de cuivre 21.

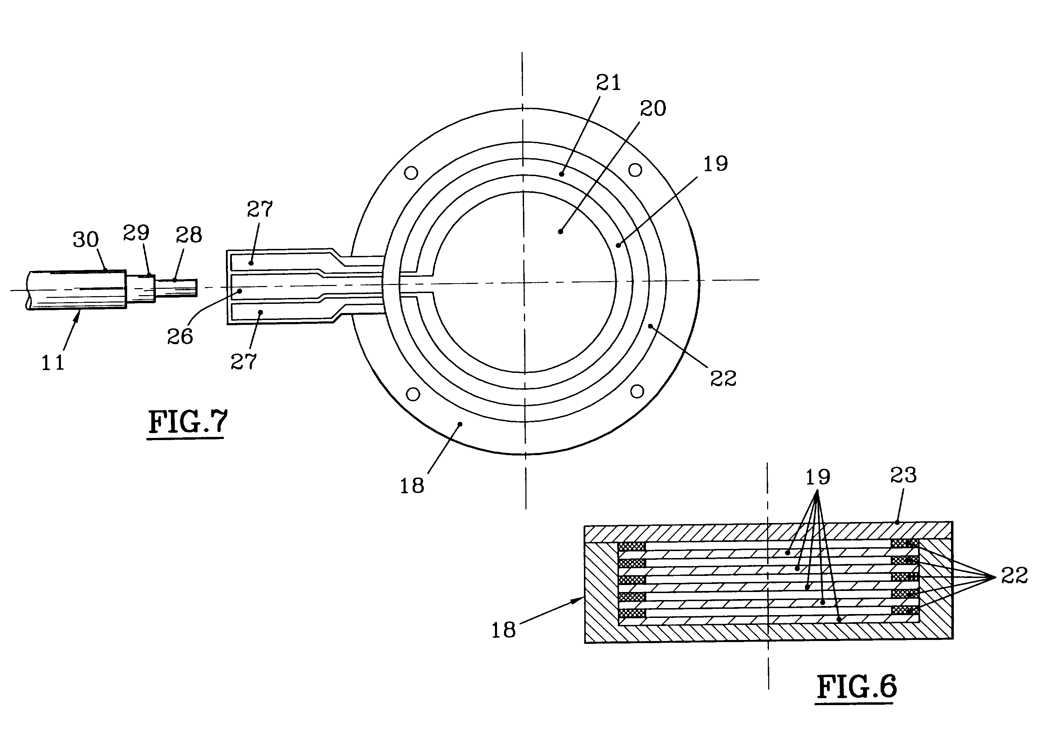

Entre les disques-électrodes 19 sont interposés à la périphérie des anneaux 22 en matériau isolant, l'ensemble étant enfermé dans le boîtier 18 fermé par un couvercle 23 (figure 6) de même métal, le couvercle étant enlevé sur la figure 7.

Les électrodes sont agencées de façon à former deux chambres d'ionisation en parallèle, l'électrode de collecte du signal, désignée S sur les figures 5 et 7, étant connectée aux couches circulaires 20 du disque 19 central ainsi qu'à la couche circulaire interne 20 des deux disques 19 externes. Comme on peut l'observer sur la figure 5, les couches 20 des trois disques 19 internes sont reliées par des connexions 24. Il en est de même pour les cinq disques 19 avec les couches annulaires 21 reliées entre elles sur un même disque par une connexion 25. En outre, les couches externes 20 des deux disques 19 externes sont reliées aux couches annulaires 21.

La tension de polarisation du capteur est appliquée entre, d'une part (300 volts), les couches 20 des deux disques 19 flanquant le disque 19 central et, d'autre part (0 volt), les couches internes 20 des deux disques 19 externes.

En outre, le potentiel 0 volt est relié à toutes les couches annulaires 21 des disques 19 en sorte de former, à la manière connue, des anneaux de garde sur les électrodes confinant de manière précise le champ de collecte des charges électriques générées lors de l'ionisation du gaz inter-électrodes, lequel est avantageusement de l'air.

Sur la figure 7 on a représenté en vue de dessus le disque 19 central de l'empilement des figures 5 et 6. Tous les disques 19 sont physiquement constitués de la même manière et comportent sur leurs deux faces des connexions latérales réalisées sur des pattes prolongeant les disques, à savoir une borne 26 reliée à la couche 20 centrale et flanquée de deux bornes 27 reliées à la couche annulaire 21.

En 11 est représenté le câble triaxial dont le conducteur central 28 sera connecté aux bornes 26 des disques 19 concernés afin de collecter le signal S, cependant que la gaine intermédiaire 29 sera connectée (0 volt) aux bornes 27 de tous les disques 19, conformément au schéma de connexion de la figure 5 et que la gaine externe 30 acheminera le potentiel de 300 volts à la borne 26 des disques 19 concernés.

Sur la figure 4 on a représenté la forme du signal S provenant du capteur et qui est une forme typique de signal issu d'une chambre d'ionisation recevant une dose de rayonnement X.

Ce signal se caractérise par un temps de montée court et un temps de descente long.

Le capteur fournit une impulsion de courant très faible, de l'ordre de $10^{-9}$ ampère.

Dans le cas d'un rayonnement X ce courant peut être mis sous la forme :

$$I = \frac{K.v.p.D}{1,08} \times 10^{-13}$$

Le courant I est ici exprimé en ampère, K étant une constante caractérisant le gaz utilisé dans la chambre d'ionisation (K étant égal à 1 pour l'air), v étant le volume utile en $cm^3$, p la pression du gaz exprimé en atmosphère (pression atmosphérique dans le cas du présent capteur) et d étant le débit de dose en roentgen/heure.

Le capteur donne donc une valeur qualitative du débit de dose qu'il sera possible ultérieurement de quantifier.

Le courant issu du capteur 7 est acheminé par le câble triaxial 11 au circuit 12 où il est transformé en tension par conversion et amplification Le signal de tension obtenu est alors intégré afin de connaître la valeur moyenne qui pourra être ensuite visualisée, affichée et enregistrée par des moyens d'exploitation appropriés (16, 17).

L'ensemble des appareils et dispositifs d'amplification et traitement du signal S délivré par le capteur 7 se trouve dans la zone neutre 9 et n'est donc pas perturbé par les parasites engendrés dans la zone 8.

La figure 3 illustre un mode de réalisation du dispositif de mise en oeuvre du procédé de l'invention plus perfectionné.

Le capteur, représenté en 7', est relié par un câble triaxal 11' à un ensemble 31 de traitement du signal situé en zone neutre comprenant notamment un circuit 32 d'amplification et conversion du signal de courant en signal de tension, un circuit 33 d'intégration relié à un micro-ordinateur 34, une alimentation haute tension 35, une alimentation basse tension 36.

Le micro-ordinateur 34 est par exemple un PC 386-SX de la société IBM et est utilisé avec une carte d'acquisition, par exemple la carte Lab PC + de la société National Instruments, convertissant les signaux analogiques en signaux numériques et les gérant.

La carte est gérée par un logiciel de gestion approprié.

Le logiciel de gestion réalise d'une manière générale deux types de fonction, à savoir des fonctions secondaires de surveillance des alimentations 35, 36, d'aiguillage du signal et de procédure de test de vérification et de fonctions principales telles que définition d'une mission de mesure, calcul de la dose moyenne, calcul de la fonction Ecart-dose, historique d'une campagne d'essais.

Avantageusement, le dispositif pourra, comme également représenté en figure 3, être interfacé avec l'ensemble informatisé pilotant l'installation de polymérisation par irradiation et gérant notamment le canon à électrons 1 et les moyens de déplacement de la pièce 6 en cours de traitement (cf EP 0.165.118) en cours de traitement.

Sur la figure 3 on a symbolisé en 1 le canon à électrons, en 37 l'ordinateur de commande de ce dernier et en 38 un dispositif pilote.

Le dispositif 38 reçoit du micro-ordinateur 34 la mesure du débit de dose, compare celle-ci à la consigne de débit de dose fournie par l'ordinateur 37 de commande du canon 1.

Le dispositif pilote 38 fournit au canon 1 un signal de commande de puissance approprié.

Par ailleurs, le canon 1 est relié à l'intégrateur 33 afin de fournir des impulsions de synchronisation (remise à zéro RAZ), c'est-à-dire d'acquisition d'une mesure à chaque impulsion du canon 1.

Ainsi, le dispositif de l'invention pourra non seulement contrôler pas à pas, au cours du déroulement du programme ou cycle de polymérisation, l'évolution du débit de dose, le comparer à un programme d'évolution préétabli et éventuellement intervenir, en cas de valeur de débit de dose différente de la valeur préétablie, consécutive par exemple à une variation de régime du canon 1, pour agir à des fins de compensation et pour avoir la dose locale optimale d'irradiation. Une telle réaction est possible car la mesure est instantanée et l'action sur le générateur a des effets immédiats qui s'appliquent à l'endroit désiré puisque l'irradiation d'une surface procède par recouvrement à plusieurs reprises de cette même surface.

Le capteur 7 ou 7' est avantageusement placé dans le lobe de rétrodiffusion 5 de la cible 3 (fig. 2) par exemple avec le plan des électrodes sensiblement dans le plan de la cible.

Le capteur peut néanmoins être placé dans d'autres positions par rapport à la cible, par exemple à l'avant, ou en dessous, ou au dessus de la cible.

En l'absence d'étalonnage du signal de mesure, le dispositif ne donne qu'une simple évaluation d'ordre de grandeur, ce qui est néanmoins suffisant pour assurer une bonne répétitivité. Bien entendu, si une plus grande précision des débits de dose était nécessaire, on effectuerait un étalonnage préalable du dispositif.

On peut ainsi contrôler qu'au cours du processus d'irradiation l'évolution des valeurs de débit de dose ainsi "mesurées" se situe dans une fourchette de valeurs suivant sensiblement le profil de la courbe d'irradiation (cycle de polymérisation), laquelle est calculée, à la manière habituelle, à partir d'abaques, en fonction de la géométrie de la pièce, de sa nature, du coefficient de "surdosage" choisi, etc...

Le balayage par les rayons X de la pièce à traiter (6) s'effectue en long, en une seule fois ou après plusieurs passes, la pièce 6 étant entraînée en rotation autour de son axe.

Il est également à noter que le capteur 7 ou 7' peut être utilisé pour mesurer des débits de dose de rayonnement électronique, la cible 3 étant escamotée. Le boîtier métallique du capteur, de préférence en tungstène, fait office de cible engendrant un rayonnement X secondaire proportionnel à la puissance des faisceaux d'électrons et qui sera détecté par le capteur.

Enfin, l'invention n'est évidemment pas limitée aux modes de mises en oeuvre décrits ci-dessus mais en couvre au contraire toutes les variantes, notamment en ce qui concerne la structure de la chambre d'ionisation, dont les électrodes pourraient être cylindriques par exemple, et les moyens de liaison entre la chambre d'ionisation et les circuits de traitement du signal délivré par ladite chambre, situés en zone neutre. C'est ainsi qu'aux lieu et place du câble triaxial 11, 11' on pourrait utiliser deux câbles coaxiaux blindés.

Le procédé de l'invention s'applique également au contrôle de débit de dose de rayonnement, photonique ou électronique, à partir d'un canon à électrons, destiné à la stérilisation des produits alimentaires et d'objets et instruments notamment à usage médical.

Le procédé permet en particulier un contrôle instantané et automatique de la réception par exemple sur une chaîne de stérilisation à convoyeur sur lequel se déplacent en continu des paquets ou ensembles d'objets ou produits, de la quantité nécessaire et suffisante de particules ionisantes. Il suffit, à cet effet, de vérifier que chaque objet a reçu une dose se trouvant entre un minimum et un maximum prédéterminés et affichés dans l'installation de contrôle mettant en oeuvre le procédé de l'invention.

## Revendications

1. Procédé de contrôle en temps réel du débit de dose de particules ou rayonnements ionisants, notamment de rayonnements X, générés à partir d'un accélérateur linéaire d'électrons (1) et appliqués à des objets, caractérisé en ce qu'il consiste :

   - à prélever en continu à l'aide d'une chambre d'ionisation appropriée (7, 7'), du type à électrodes planes, placée dans le champ de particules ou rayonnement ionisant (8), le courant de collecte de charge entre les électrodes, image du débit de dose instantané dudit rayonnement,
   - à acheminer, par l'intermédiaire d'un système conducteur blindé approprié (11, 11'), ledit courant de collecte à une chaîne d'amplification et mesure (12, 31) disposée en dehors (9) de la zone d'irradiation (8) et traduisant les intensités de courant en valeurs de débit de dose,
   - et à traiter et/ou afficher et/ou enregistrer lesdites valeurs de débit de dose.

2. Procédé selon la revendication 1, plus particulièrement appliqué à la polymérisation de résines de pièces ou structures en matériaux composites (6) ainsi qu'à la stérilisation de produits alimentaires ou d'objets tels que des instruments à usage médical, caractérisé en ce que l'on compare l'évolution des valeurs de débit de dose avec des valeurs de débit de dose prédéterminées suivant un cycle d'irradiation établi en fonction des pièces, structures, produits ou objets à traiter et on détecte les éventuels écarts entre débits programmés et débits détectés, supérieurs à des seuils prédéterminés.

3. Procédé suivant la revendication 2, caractérisé en ce qu'à partir de la détection desdits écarts, on commande en conséquence l'accélérateur (1) en sorte de compenser automatiquement et immédiatement, notamment les variations passagères de régime dudit accélérateur (1).

4. Dispositif pour la mise en oeuvre du procédé selon la revendication 1, caractérisé en ce qu'il comprend une chambre d'ionisation du type à électrodes planes (7, 7'), reliée par l'intermédiaire d'un dispositif conducteur blindé approprié (11, 11') à un ensemble d'amplification-traitement du signal (12, 31) et des moyens d'exploitation (16, 17, 34).

5. Dispositif suivant la revendication 4, caractérisé en ce que la chambre d'ionisation est constituée d'un empilement dans un boîtier métallique (18, 23) de cinq disques (19) en matériau diélectrique munis sur leur deux faces de revêtements métalliques définissant des électrodes circulaires (20) et des anneaux de garde périphériques (21), les électrodes étant connectées de façon à constituer deux chambres d'ionisation en parallèle, les électrodes (20) de collecte du signal (S) étant chacune en vis à vis d'une électrode (20) portée à un potentiel de plusieurs centaines de volts, des électrodes (20) portées à un potentiel nul étant ménagées sur les disques externes (19).

6. Dispositif suivant les revendications 4 et 5, caractérisé en ce que l'électrode de collecte du signal (S) est reliée au conducteur central (28) d'un câble triaxial (11, 1l'), l'électrode centrale (20) à potentiel élevé est reliée à la gaine externe (30) dudit câble triaxial et les électrodes de potentiel nul (20) sont reliées à la gaine intermédiaire (29).

7. Dispositif suivant l'une des revendications 4 à 6, caractérisé en ce que le boîtier (18, 23) de la chambre d'ionisation (7, 7') est en tungstène.

8. Dispositif suivant la revendication 4, caractérisé en ce que lesdits moyens d'exploitation sont constitués de moyens d'affichage/visualisation (16, 17) et/ou d'enregistrement.

9. Dispositif suivant la revendication 4, caractérisé en ce que lesdits moyens d'exploitation sont constitués par un système informatisé à micro-ordinateur (34) et carte d'acquisition de données.

10. Dispositif suivant la revendication 9, plus particulièrement destiné à la mise en oeuvre du procédé selon la revendication 3, caractérisé en ce qu'il comporte, en outre, un dispositif pilote (38) relié, d'une part, audit système informatisé à micro-ordinateur (34) et, d'autre part, à un ordinateur (37) de commande dudit accélérateur (1) et envoyant à ce dernier un signal de commande de puissance en fonction de l'écart entre la mesure de débit de dose fournie par ledit système informatisé (34) et une consigne délivrée par ledit ordinateur (37).

11. Dispositif suivant la revendication 10, caractérisé en ce que le ledit accélérateur (1) est relié audit ensemble d'amplification-traitement du signal (31) en vue de commander l'acquisition d'une mesure à chaque impulsion dudit accélérateur (1).

FIG.1

FIG.3

220V

ALIM HT  35

ALIM BT  36

Surveillance B.T

Surveillance H.T

34

RAZ

32

I --> U    Intégrateur

RAZ

33

Intégrateur

mesure débit
de dose

38

consigne

-37-

K

signal test

31

11'

7'

1

EP 0 747 729 A1

6

FIG.2

FIG.5

FIG.4

FIG.7

FIG.6

EP 0 747 729 A1

**Office européen des brevets**

## RAPPORT DE RECHERCHE EUROPEENNE

Numero de la demande

EP 96 45 0013

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | NUCLEAR INSTRUMENTS AND METHODS, vol. 196, no. 2/3, 1982, AMSTERDAM NL, pages 469-475, XP002003446 YAMAMOTO,T ET AL.: "dosimetry of pulsed x-ray of high exposure rate generated by an electron linear accelerator with an ionization chamber" * En Entier * | 1,4 | G01T1/185 G01T1/02 |
| A | US-A-4 975 585 (ASAI KATSUJI) 4 Décembre 1990 * abrégé * * colonne 2, ligne 51 - colonne 4, ligne 19 * * figures * | 1,4 | |
| D,A | US-A-4 689 488 (BEZIERS DANIEL) 25 Août 1987 * abrégé * * colonne 4, ligne 18 - colonne 6, ligne 57 * * figures * | 2 | |
| | ----- | | DOMAINES TECHNIQUES RECHERCHES (Int.Cl.6) G01T |

Le présent rapport a été établi pour toutes les revendications

| Lieu de la recherche | Date d'achèvement de la recherche | Examinateur |
|---|---|---|
| LA HAYE | 13 Septembre 1996 | Datta, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)